(19) Europäisches Patentamt
European Patent Office
Office européen des brevets

(11) **EP 3 229 247 B1**

(12) **FASCICULE DE BREVET EUROPEEN**

(45) Date de publication et mention
de la délivrance du brevet:
**02.01.2019 Bulletin 2019/01**

(51) Int Cl.:
*H01F 30/12* *(2006.01)*     *H01F 3/10* *(2006.01)*

(21) Numéro de dépôt: **17164096.4**

(22) Date de dépôt: **31.03.2017**

(54) **COMPOSANT MAGNETIQUE, CIRCUIT ELECTRIQUE RESONANT, CONVERTISSEUR ELECTRIQUE ET SYSTEME ELECTRIQUE**

MAGNETKOMPONENTE, ELEKTRISCHER RESONANZSCHALTKREIS, STROMWANDLER UND ELEKTRISCHES SYSTEM

MAGNETIC COMPONENT, RESONANT ELECTRIC CIRCUIT, ELECTRIC CONVERTER AND ELECTRICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2016 FR 1653154**

(43) Date de publication de la demande:
**11.10.2017 Bulletin 2017/41**

(73) Titulaire: **Valeo Systèmes de Contrôle Moteur 95892 Cergy Pontoise (FR)**

(72) Inventeur: **YANG, Gang 92400 COURBEVOIE (FR)**

(74) Mandataire: **Argyma 36, rue d'Alsace Lorraine 31000 Toulouse (FR)**

(56) Documents cités:
**FR-A- 2 134 409**     **GB-A- 2 254 202**
**US-A- 2 137 433**     **US-A- 4 206 434**
**US-A1- 2009 303 652**

## Description

DOMAINE TECHNIQUE

La présente invention concerne les circuits électriques résonants, en particulier employés dans les convertisseurs électriques.

ARRIÈRE-PLAN TECHNOLOGIQUE

Le document GB 2254202 A décrit un composant magnétique comportant un noyau magnétique comportant une partie inférieure en forme de « E », une partie supérieure en forme de « E » et une partie centrale en forme de « I » fermant la partie supérieure et la partie inférieure de façon à définir deux circuits magnétiques. Les documents US 2137433 A et FR 2134409 A1 décrivent des arrangements similaires.

En outre, l'article « Design guideline for magnetic integration in LLC resonant converters » de De Simone et al., publié en 2008 dans le cadre de la conférence : « Power Electronics, Electrical Drives, Automation and Motion, 2008. SPEEDAM 2008 » décrit un composant magnétique comportant :

- un noyau magnétique comportant une première branche, une deuxième branche et une troisième branche se rejoignant en leurs deux extrémités et présentant des réluctances respectives,
- une première bobine et une deuxième bobine enroulées autour de la première branche pour être couplées l'une à l'autre.

Dans cet article, il est proposé de former un circuit électrique résonant de type LLC ajoutant une capacité en série des inductances et en réduisant volontairement le couplage entre les deux bobines de manière à créer une inductance série Lr, en plus d'une inductance magnétisante $L_m$. Ce couplage imparfait est obtenu en écartant les bobines l'une de l'autre. Ainsi, l'encombrement du circuit électrique résonant peut être réduit.

Cependant, il est difficile d'atteindre des grandes valeurs d'inductance série Lr sans augmenter la taille du noyau magnétique, et sans entraîner l'apparition de pertes par courant de Foucault. En outre, comme la valeur de l'inductance série Lr dépend de la position des bobines, il est difficile de la fixer précisément et de manière fiable, c'est-à-dire reproductible.

L'invention a pour but de proposer un composant magnétique permettant de fixer précisément et de manière fiable la valeur de l'inductance série Lr, tout en ayant un encombrement réduit.

RÉSUMÉ DE L'INVENTION

À cet effet, il est proposé un composant magnétique caractérisé en ce qu'il comporte :

- un noyau magnétique comportant une partie inférieure en forme de « E », une partie supérieure en forme de « E » et une partie centrale en forme de « I » fermant à la fois la partie inférieure et la partie supérieure de manière que la partie inférieure et la partie centrale définissent deux circuits magnétiques inférieurs et que la partie supérieure et la partie centrale définissent deux circuits magnétiques supérieurs,
- une première bobine et une deuxième bobine enroulées autour d'une branche centrale de la partie inférieure pour être couplées l'une à l'autre,
- une troisième bobine enroulée autour d'une branche centrale de la partie supérieure, la troisième bobine étant connectée en série avec la deuxième bobine,

la partie centrale présentant une réluctance inférieure à la fois à celle de la partie inférieure le long de chaque circuit magnétique inférieur et à celle de la partie supérieure le long de chaque circuit magnétique supérieur.

De façon optionnelle, la partie supérieure comporte un premier entrefer.

De façon optionnelle également, la branche centrale de la partie supérieure comporte le premier entrefer.

De façon optionnelle également, la branche centrale de la partie supérieure comporte un barreau dont une extrémité s'arrête à distance de la partie centrale de manière à former le premier entrefer.

De façon optionnelle également, la partie inférieure comporte un deuxième entrefer.

De façon optionnelle également, la branche centrale de la partie inférieure comporte le deuxième entrefer.

De façon optionnelle également, la branche centrale de la partie inférieure comporte deux barreaux alignés présentant des extrémités en vis-à-vis à distance l'une de l'autre de manière à former le deuxième entrefer.

De façon optionnelle également, la branche centrale de la partie inférieure et la branche centrale de la partie supérieure sont dépourvues d'entrefer.

De façon optionnelle également, la partie inférieure et la partie supérieure du noyau magnétique sont réalisées avec un matériau présentant une perméabilité relative maximale inférieure à 100, tandis que la partie centrale est réalisée avec un matériau présentant une perméabilité relative maximale supérieure à 100, de préférence supérieure à 1 000.

De façon optionnelle également, les première et deuxième bobines présentent des inductances propres respectives L1, L2 et sont couplées l'une à l'autre de manière à présenter une inductance mutuelle M non nulle, liée aux inductances propres L1, L2 par un coefficient de couplage k :

$$k = \frac{M}{\sqrt{L1 \cdot L2}}$$

le coefficient de couplage k étant supérieur ou égale à 0,9, de préférence supérieur ou égal à 0,95, de préférence encore supérieur ou égal à 0,99.

De façon optionnelle également, dans lequel le noyau magnétique présente une symétrie axiale par rapport à un axe vertical centré sur les branches centrales des parties supérieure et inférieure.

De façon optionnelle également, le composant magnétique comporte trois pièces mécaniques en forme de « E » présentant chacune un barreau transversal d'où part deux barreaux latéraux et un barreau central, les deux premières pièces mécaniques sont assemblées en face l'une de l'autre de sorte que leurs barreaux latéraux et centraux soient respectivement alignés, ces deux premières pièces mécaniques formant les parties inférieure et centrale du noyau magnétique, la partie centrale étant formée par le barreau transversal de l'une de ces deux pièces mécaniques, et la troisième pièce mécanique est assemblée contre le barreau transversal formant la partie centrale de manière à former la partie supérieure du noyau magnétique.

Il est également proposé un circuit électrique résonant comportant :

- un composant magnétique selon l'invention,
- une capacité connectée en série avec la deuxième bobine et la troisième bobine.

Il est également proposé un convertisseur électrique comportant :

- un générateur de tension conçu pour fournir une tension variable à partir d'une tension continue,
- un circuit électrique résonant selon l'invention, pour fournir un courant alternatif à partir de la tension variable,
- un redresseur conçu pour fournir une tension continue à une charge électrique à partir du courant alternatif.

De façon optionnelle, le redresseur comporte :

- une capacité de lissage destinée à être connectée en parallèle de la charge électrique,
- un pont de diodes connecté en entrée aux extrémités de la première bobine et en sortie aux bornes de la capacité de lissage.

De façon optionnelle également, le redresseur comporte :

- une capacité de lissage destinée à être connectée en parallèle de la charge électrique, une borne de la capacité de lissage étant connectée en un point milieu de la première bobine,
- deux diodes au travers desquelles l'autre borne de la capacité de lissage est connectée respectivement aux deux extrémités de la première bobine.

Il est également proposé un système électrique comportant une source de tension telle qu'une batterie de véhicule automobile, une charge électrique telle que des accessoires électrique de véhicule automobile et un convertisseur électrique selon l'invention, entre la source de tension et la charge électrique.

DESCRIPTION DES FIGURES

La figure 1 est un schéma électrique d'un système électrique comportant un convertisseur électrique selon l'invention.
La figure 2 est une vue de face d'un noyau magnétique du convertisseur électrique de la figure 1.
La figure 3 est un schéma électrique équivalent d'un circuit électrique résonant du convertisseur électrique de la figure 1.
La figure 4 est une vue en coupe d'un noyau magnétique et de bobines enroulées autour de ce noyau magnétique, faisant partie du circuit électrique résonant des figures 1 et 2.
La figure 5 est un chronogramme de flux magnétiques parcourant le noyau magnétique de la figure 3.
La figure 6 est une vue en coupe d'une variante de noyau magnétique selon l'invention.
La figure 7 est un schéma électrique d'une variante de circuit résonant électrique selon l'invention.

DESCRIPTION DÉTAILLÉE

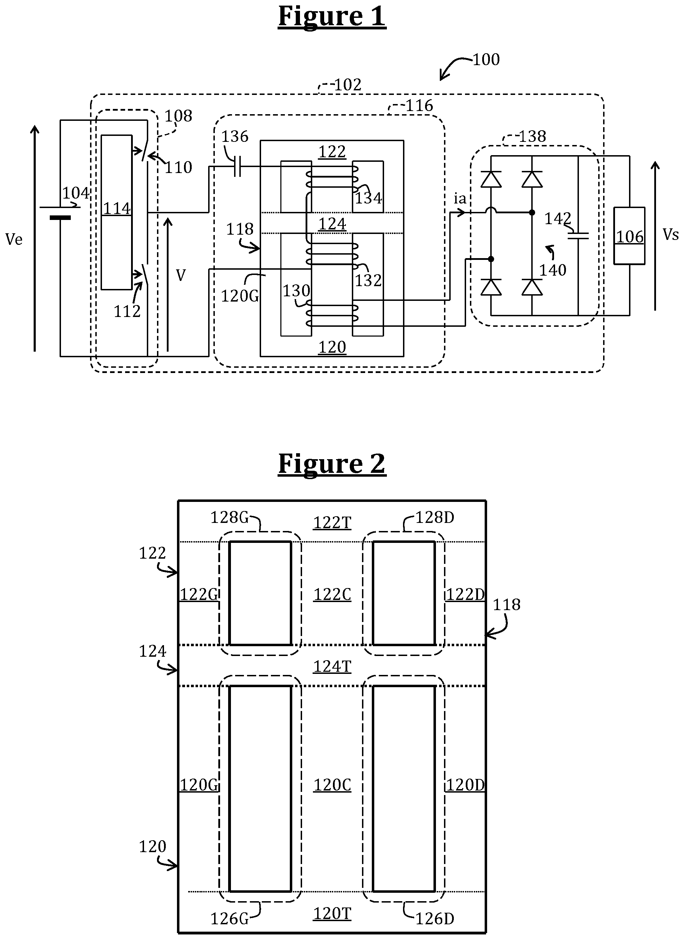

En référence à la figure 1, un système électrique 100 comportant un convertisseur électrique 102 mettant en oeuvre l'invention va à présent être décrit. Un tel système électrique 100 peut par exemple être utilisé dans un véhicule automobile.

Le système électrique 100 comporte tout d'abord une source de tension 104 conçue pour fournir une tension d'entrée Ve qui est continue. La source de tension 104 comporte par exemple une batterie de véhicule automobile.

Le système électrique 100 comporte en outre une charge électrique 106, telle que des accessoires électriques de véhicule automobile.

Le convertisseur électrique 102 est conçu pour recevoir la tension d'entrée Ve et pour fournir à la charge électrique 106 une tension de sortie Vs.

Dans l'exemple décrit, le convertisseur électrique 102 est de type continu-continu, de sorte que la tension de sortie Vs est continue. Plus précisément, dans l'exemple décrit, le convertisseur électrique 102 est un convertisseur à résonance LLC (de l'anglais « LLC resonant converter »).

Le convertisseur électrique 102 comporte un générateur de tension 108 conçu pour fournir une tension variable V, à une fréquence souhaitée, à partir de la tension d'entrée Ve.

De préférence, la tension variable V est une tension directe (c'est-à-dire ne changeant pas de signe). Dans l'exemple décrit, la tension variable V est une tension carrée. À cet effet, le générateur de tension 108 comporte deux interrupteurs 110, 112 et un dispositif de commande 114 des interrupteurs 110, 112, de sorte que la tension variable prend alternativement la valeur de la tension d'entrée Ve et la valeur nulle.

Le convertisseur électrique 102 comporte en outre un circuit électrique résonant 116 conçu pour fournir, à partir de la tension variable, un courant alternatif ia à la même fréquence que la tension variable V.

Le circuit électrique résonant 116 comporte tout d'abord un noyau magnétique 118.

Dans l'exemple de la figure 1, le noyau magnétique est par exemple réalisé en matériau ferrite.

Le noyau magnétique 118 comporte une partie inférieure 120 en forme de « E », une partie supérieure 122 en forme de « E » et une partie centrale 124 en forme de « I ».

En référence à la figure 2, la forme du noyau magnétique 118 va être décrite plus en détail.

La partie inférieure 120 comporte tout d'abord une branche verticale gauche 120G, une branche verticale centrale 120C et une branche verticale droite 120D, toutes les trois rectilignes et parallèles entre elles. La partie inférieure 120 comporte en outre une branche horizontale 120T qui est rectiligne et perpendiculaire aux trois branches verticales 120G, 120C, 120D. Trois premières extrémités respectives des trois branches verticales 120G, 120C, 120D rejoignent la branche horizontale 120T.

La partie supérieure 122 comporte tout d'abord une branche verticale gauche 122G, une branche verticale centrale 122C et une branche verticale droite 122D, toutes les trois rectilignes et parallèles entre elles. La partie supérieure 122 comporte en outre une branche horizontale 122T qui est rectiligne et perpendiculaire aux trois branches verticales 122G, 122C, 122D. Trois premières extrémités respectives des trois branches verticales 122G, 122C, 122D rejoignent la branche horizontale 122T.

La partie centrale 124 comporte une branche horizontale 124T rectiligne et perpendiculaire aux trois branches verticales 120G, 120C, 120D de la partie inférieure 120 et aux trois branches verticales 122G, 122C, 122D de la partie supérieure 122. Trois deuxièmes extrémités respectives des trois branches verticales 120G, 120C, 120D de la première partie 120 et trois deuxièmes extrémités respectives des trois branches verticales 122G, 122C, 122D de la partie supérieure 122 rejoignent la branche horizontale 124T. Ainsi, la partie centrale 124 ferme à la fois la partie supérieure 122 et la partie inférieure 120 du noyau magnétique.

Les branches verticales gauches 120G, 122G sont dans la continuité l'une de l'autre. Les branches verticales centrales 120C, 122C sont dans la continuité l'une de l'autre. Les branches verticales droites 120D, 122D sont dans la continuité l'une de l'autre.

En outre, le noyau magnétique 118 présente une symétrie axiale par rapport à un axe vertical centré sur les branches verticales centrales 120C, 122C.

Ainsi, la partie inférieure 120 et la partie centrale 124 définissent deux circuits magnétiques inférieurs 126G, 126D fermés en forme de boucle. La partie centrale 124 présente une réluctance inférieure, de préférence au moins dix fois inférieure, de préférence encore au moins cent fois inférieure, à la réluctance de la partie inférieure 120 le long de chaque circuit magnétique inférieur 126G, 126D.

De même, la partie supérieure 122 et la partie centrale 124 définissent deux circuits magnétiques supérieurs 128G, 128D fermés en forme de boucle. La partie centrale 124 présente une réluctance inférieure, de préférence au moins dix fois inférieure, de préférence encore au moins cent fois inférieure, à la réluctance de la partie supérieure 122 le long de chaque circuit magnétique supérieur 128G, 128D.

De retour à la figure 1, le circuit électrique résonant 116 comporte en outre une première bobine 130 et une deuxième bobine 132 enroulées autour de la branche verticale centrale 120C de la partie inférieure 120. Les bobines 130, 132 présentent des inductances propres respectives L1, L2 et sont couplées l'une à l'autre de manière à présenter une inductance mutuelle M non nulle, liée aux inductances propres L1, L2 par un coefficient de couplage k :

$$k = \frac{M}{\sqrt{L1 \cdot L2}}$$

De préférence, les bobines 130, 132 sont fortement couplées l'une à l'autre, ce qui se traduit par un coefficient de couplage k supérieur ou égal à 0,9, de préférence supérieur ou égal à 0,95, de préférence encore supérieur ou égal à 0,99.

Le circuit électrique résonant 116 comporte en outre une troisième bobine 134 enroulée autour de la branche verticale centrale 122C de la partie supérieure 122.

Le circuit électrique résonant 116 comporte en outre une capacité 136 connectée en série avec les bobines 132, 134.

Comme les bobines 132, 134 sont en série, il est possible de les réaliser avec un seul fil, ce qui permet d'éviter les pertes d'extrémité de fil.

Le convertisseur électrique 102 comporte en outre un redresseur 138 conçu pour fournir la tension de sortie Vs à partir du courant alternatif ia.

Dans l'exemple décrit, le redresseur 138 comporte un pont de diodes 140, ainsi qu'une capacité de lissage 142. Le pont de diodes 140 est connecté en entrée aux deux extrémités de la bobine 130, et en sortie aux bornes de la capacité de lissage 142 et de charge électrique 106.

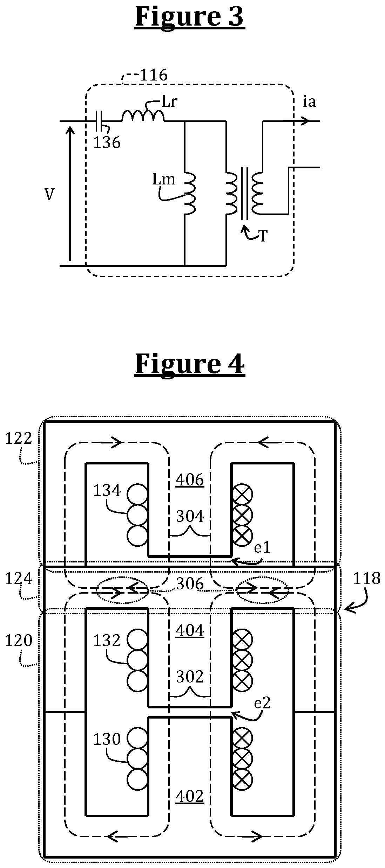

En référence à la figure 3, le circuit électrique résonant 116 est représenté avec un schéma électrique équivalent au noyau magnétique 118 et aux bobines 130, 132, 134.

Les bobines 130, 132 forment un transformateur idéal T et une inductance magnétisante Lm au primaire du transformateur idéal T. La valeur de l'inductance magnétisante Lm est définie notamment par la largeur de l'entrefer e2. La troisième bobine 134 forme une inductance série Lr. La valeur de l'inductance série Lr est définie notamment par la largeur de l'entrefer e1.

En référence à la figure 4, un exemple de réalisation du noyau magnétique 118 et de l'enroulement des bobines 130, 132, 134 est représenté.

Bien que la forme du noyau magnétique 118 ait été décrite sur les figures 1 et 2 en décomposant ce dernier en trois parties 120, 122, 124, cela ne signifie pas que le noyau magnétique 118 soit toujours obtenu par l'assemblage de trois pièces correspondant à ces trois parties 120, 122, 124. Dans l'exemple décrit, le noyau magnétique 118 est obtenu par l'assemblage de trois pièces mécaniques 402, 404, 406 en forme de « E » présentant chacune un barreau transversal d'où part deux barreaux latéraux et un barreau central.

Les pièces 402, 404 sont assemblées en face l'une de l'autre de sorte que leurs barreaux latéraux et centraux soient respectivement alignés. En outre, les extrémités libres de leurs barreaux latéraux se rejoignent. Le barreau central d'au moins une des pièces 402, 404 est moins long que les barreaux latéraux l'entourant de sorte que les barreaux centraux des pièces 402, 404 présentent des extrémités en vis-à-vis à distance l'une de l'autre de manière à former un entrefer e2 (« air-gap » en anglais).

La pièce 406 est assemblée contre le barreau transversal de la pièce 404 de sorte que ses barreaux latéraux rejoignent le barreau transversal de la pièce 404. Le barreau central de la pièce 406 est moins long que les barreaux latéraux l'entourant de sorte que l'extrémité libre du barreau central de la pièce 406 s'arrête à distance du barreau transversal de la pièce 404 de manière à former un entrefer e1 (« air-gap » en anglais).

Ainsi, dans l'exemple décrit, la partie supérieure 122 du noyau magnétique 118 est formée par la pièce 406 et l'entrefer e1. En outre, la partie centrale 124 du noyau magnétique 118 est formée par le barreau transversal de la pièce 404. En outre, la partie inférieure 120 du noyau magnétique 118 est formée par la pièce 402, les barreaux latéraux et central de la pièce 404 et l'entrefer e2.

Chacun des entrefers e1, e2 peut être laissé rempli d'air, ou bien il peut être rempli d'un matériau de faible perméabilité (perméabilité relative maximale inférieure à 100).

En particulier, l'entrefer e1 présente une longueur, également notée e1, choisie pour obtenir l'inductance série Lr, par exemple à l'aide de la formule suivante :

$$e1 = N^2 \cdot \mu0 \cdot Se1/Lr$$

où N représente le nombre de tours de la bobine 134, $\mu0$ représente la perméabilité du vide et Se1 représente la section efficace de la branche 124.

En outre, l'entrefer e2 présente une longueur, également notée e2, choisie pour obtenir l'inductance magnétisante Lm, par exemple à l'aide de la formule suivante :

$$e2 = N1^2 \cdot \mu0 \cdot Se2/Lm$$

où N1 représente le nombre de tours de la bobine 132, $\mu0$ représente la perméabilité du vide et Se2 représente la section efficace de la branche 120.

Par ailleurs, la bobine 130 peut être enroulée autour de la bobine 132, afin d'améliorer le couplage entre elles.

La bobine 132 est destinée à générer un flux magnétique 302 dans les parties inférieure 120 et centrale 124 du noyau magnétique 118, tandis que la bobine 134 est destinée à générer un flux magnétique 304 dans les parties supérieure 122 et centrale 124 du noya magnétique.

Comme la partie centrale 124 du noyau magnétique 118 présente une réluctance faible, les flux magnétiques 302, 304 rebouclent par cette branche partie centrale 124. De cette manière, la bobine 134 est isolée magnétiquement des bobines 130, 132, de sorte que le transformateur formé par les bobines 130, 132 et l'inductance série Lr formée par la bobine 134 fonctionnent indépendamment l'un de l'autre.

Le sens d'enroulement des bobines 132, 134 est choisi de sorte que les flux magnétiques 302, 304 parcourent la partie centrale 124 dans des directions opposées. Ainsi, le flux magnétique résultant 306 dans la partie centrale 124 reste faible. Par exemple, les bobines 132, 134 sont enroulées dans le même sens de rotation.

Les bobines 130, 132, 134 sont de préférence réalisées avec du fil de Litz, ce qui permet de réduire les pertes par courant de Foucault. Néanmoins, d'autres types de conducteur pourraient être utilisés, comme par exemple des conducteurs ronds ou bien des plaques de cuivre.

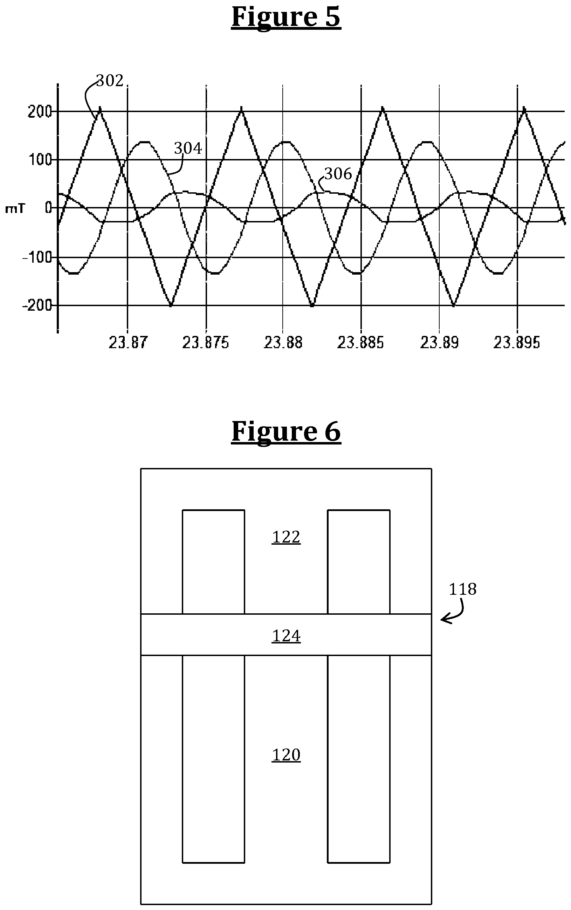

En référence à la figure 5, un exemple d'évolution au cours du temps des flux magnétiques 302, 304, 306 est représenté. Il sera en particulier apprécié que le flux magnétique résultant 306 est plus faible que les deux autres flux magnétiques 302, 304. Ainsi, les pertes dans la partie centrale 124 du noyau magnétique 118 sont réduites et le risque d'apparition d'un point chaud est également réduit. En outre, la section transversale de la partie centrale 124 est réduite ce qui permet d'améliorer la compacité du circuit électrique résonant 116. En outre, comme le transformateur formé par les bobines 130, 132 et la bobine 134 partagent le même noyau magnétique, et en particulier la partie centrale 124, moins de noyau magnétique est utilisé.

Le fonctionnement du système électrique 100 va à présent être décrit.

Le générateur de tension 108 génère la tension variable V carrée, par découpage de la tension d'entrée Ve à une fréquence souhaitée.

La tension variable V est appliquée aux bornes de la capacité 136, et des bobines 132, 134 qui sont donc excitées à la fréquence de la tension variable V. En réponse à cette excitation, le courant alternatif ia apparait dans la bobine 130.

Le redresseur 140 redresse le courant alternatif ia et fournit le courant redressé à la charge électrique 106 et à la capacité de lissage 142, cette dernière lissant la tension de sortie Vs pour qu'elle soit continue.

Ainsi, il est possible d'obtenir, de manière sélective, une tension de sortie Vs plus petite ou bien plus élevée que la tension d'entrée Ve.

En référence à la figure 6, une variante de réalisation du noyau magnétique 118 va à présent être décrite.

Dans cette variante, le noyau magnétique 118 ne présente plus d'entrefer. Les parties 120, 122, 124 sont réalisées par l'assemblage de trois pièces correspondantes, et donc désignés par les mêmes références. Les pièces 120, 122 sont réalisées dans un matériau de faible perméabilité (perméabilité relative maximale inférieure à 100) tel que des métaux en poudre (de l'anglais « *powdered metal* »), tandis que la pièce 124 est réalisée dans un matériau de forte perméabilité (perméabilité relative maximale supérieure à 100, de préférence supérieure à 1 000).

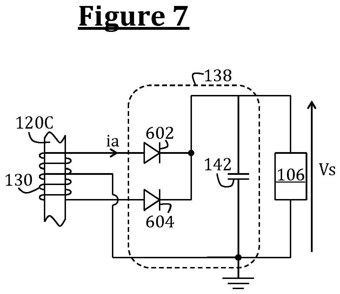

En référence à la figure 7, une variante de réalisation du circuit électrique résonant 116 et du redresseur 138 va à présent être décrite.

Dans cette variante, le redresseur 138 est connecté en prise médiane (de l'anglais « *center-tap* ») à la bobine 130. Plus précisément, une borne de la capacité de lissage 142 et de la charge électrique 106 est connectée en un point milieu de la bobine 130, tandis que l'autre borne de la capacité de lissage 142 et de la charge électrique 106 est connectée aux deux extrémités de la bobine 130 au travers respectivement de deux diodes 602, 604 laissant passer le courant en provenance de la bobine 130.

D'après la description précédente, il apparaît que l'invention permet de réaliser les inductances magnétisante Lm et série Lr de manière précise, et avec une fiabilité compatible avec les exigences d'une production industrielle.

En outre, comme cela est connu en soit, les champs magnétiques s'échappent du noyau magnétique 118 au niveau des entrefers e1, e2. Comme ces entrefers e1, e2 sont formés dans les branches centrales 120C, 122C qui sont entourées des branches droites et gauches 120G, 122G, 120D, 122D, ce champ magnétique échappé reste dans l'encombrement du noyau magnétique 118 et ne risque donc pas de perturber des composants électriques environnant. Ainsi, la CEM (compatibilité électromagnétique) est améliorée.

En outre, la forme particulière du noyau magnétique 118 permet de le fabriquer très facilement, soit avec trois pièces en forme de « E » (figure 4) soit avec deux pièces en forme de « E » et une pièce en forme de « I » (figure 6).

La présente invention n'est pas limitée aux modes de réalisation décrits précédemment, mais est au contraire définie par les revendications qui suivent. Il sera en effet apparent à l'homme du métier que des modifications peuvent y être apportées.

Par ailleurs, les termes utilisés dans les revendications ne doivent pas être compris comme limités aux éléments des modes de réalisation décrits précédemment, mais doivent au contraire être compris comme couvrant tous les éléments équivalents que l'homme du métier peut déduire à partir de ses connaissances générales.

## Revendications

1. Composant magnétique comportant :

   - un noyau magnétique (118) comportant une partie inférieure (120) en forme de « E », une partie supérieure (122) en forme de « E » et une partie centrale (124) en forme de « I » fermant à la fois la partie inférieure (120) et la partie supérieure (124) de manière que la partie inférieure (120) et la partie centrale (124) définissent deux circuits magnétiques inférieurs (126G, 126D) et que la partie supérieure (122) et la partie centrale (124) définissent deux circuits magnétiques supérieurs (128G, 128D),

   ledit composant magnétique étant **caractérisé en ce qu'**il comporte :

   - une première bobine (130) et une deuxième bobine (132) enroulées autour d'une branche centrale (120C) de la partie inférieure (120) pour être couplées l'une à l'autre,
   - une troisième bobine (134) enroulée autour d'une branche centrale (122C) de la partie supérieure (122), la troisième bobine (134) étant connectée en série avec la deuxième bobine (132),

   la partie centrale (124) présentant une réluctance inférieure à la fois à celle de la partie inférieure (120) le long de chaque circuit magnétique inférieur (126G, 126D) et à celle de la partie supérieure (122) le long de chaque circuit magnétique supérieur (128G, 128D).

2. Composant magnétique selon la revendication 1, dans lequel la partie supérieure (122) comporte un premier entrefer (e1).

3. Composant magnétique selon la revendication 2, dans lequel la branche centrale (122C) de la partie supérieure (122) comporte le premier entrefer (e1).

4. Composant magnétique selon la revendication 2, dans lequel la branche centrale (122C) de la partie supérieure (122) comporte un barreau dont une extrémité s'arrête à distance de la partie centrale (124) de manière à former le premier entrefer (e1).

5. Composant magnétique selon l'une quelconque des revendications 1 à 4, dans lequel la partie inférieure (120) comporte un deuxième entrefer (e2).

6. Composant magnétique selon la revendication 5, dans lequel la branche centrale (120C) de la partie inférieure (120) comporte le deuxième entrefer (e2).

7. Composant magnétique selon la revendication 6, dans lequel la branche centrale (120C) de la partie inférieure (120) comporte deux barreaux alignés présentant des extrémités en vis-à-vis à distance l'une de l'autre de manière à former le deuxième entrefer (e2).

8. Composant magnétique selon la revendication 1, dans lequel la branche centrale (120C) de la partie inférieure (120) et la branche centrale (122C) de la partie supérieure (122) sont dépourvues d'entrefer.

9. Composant magnétique selon l'une quelconque des revendications 1 à 8, dans lequel la partie inférieure (120) et la partie supérieure (122) du noyau magnétique (118) sont réalisées avec un matériau présentant une perméabilité relative maximale inférieure à 100, tandis que la partie centrale (124) est réalisée avec un matériau présentant une perméabilité relative maximale supérieure à 100, de préférence supérieure à 1000.

10. Composant magnétique selon l'une quelconque des revendications 1 à 9, dans lequel les première et deuxième bobines (130, 132) présentent des inductances propres respectives L1, L2 et sont couplées l'une à l'autre de manière à présenter une inductance mutuelle M non nulle, liée aux inductances propres L1, L2 par un coefficient de couplage k :

$$ k = \frac{M}{\sqrt{L1 \cdot L2}} $$

le coefficient de couplage k étant supérieur ou égale à 0,9, de préférence supérieur ou égal à 0,95, de préférence encore supérieur ou égal à 0,99.

11. Composant magnétique selon l'une quelconque des revendications 1 à 10, dans lequel le noyau magnétique (118) présente une symétrie axiale par rapport à un axe vertical centré sur les branches centrales (120C, 122C) des parties supérieure (122) et inférieure (120).

12. Composant magnétique selon l'une quelconque des revendications 1 à 11, comportant trois pièces mécaniques (402, 404, 406) en forme de « E » présentant chacune un barreau transversal d'où part deux barreaux latéraux et un barreau central, dans lequel les deux premières pièces mécaniques (402, 404) sont assemblées en face l'une de l'autre de sorte que leurs barreaux latéraux et centraux soient respectivement alignés, ces deux premières pièces mécaniques (402, 406) formant les parties inférieure (120) et centrale (124) du noyau magnétique (118), la partie centrale (124) étant formée par le barreau transversal de l'une (404) de ces deux pièces mécaniques (402, 404). et dans lequel la troisième pièce mécanique (406) est assemblée contre le barreau transversal formant la partie centrale (124) de manière à former la partie supérieure (122) du noyau magnétique (118).

13. Circuit électrique résonant (116) comportant :

- un composant magnétique selon l'une quelconque des revendications 1 à 12,
- une capacité (136) connectée en série avec la deuxième bobine (132) et la troisième bobine (134).

14. Convertisseur électrique (102) comportant :

- un générateur de tension (108) conçu pour fournir une tension variable (V) à partir d'une tension continue (Ve),
- un circuit électrique résonant (116) selon la revendication 13, pour fournir un courant alternatif (ia) à partir de la tension variable (V),
- un redresseur (138) conçu pour fournir une tension continue (Vs) à une charge électrique (106) à partir du courant alternatif (ia).

15. Convertisseur électrique (102) selon la revendication 14, dans lequel le redresseur (138) comporte :

- une capacité de lissage (142) destinée à être connectée en parallèle de la charge électrique (106),
- un pont de diodes (140) connecté en entrée aux extrémités de la première bobine (130) et en sortie aux bornes de la capacité de lissage (142).

16. Convertisseur électrique (102) selon la revendication 14, dans lequel le redresseur (138) comporte :

- une capacité de lissage (142) destinée à être connectée en parallèle de la charge électrique (106), une borne de la capacité de lissage (142) étant connectée en un point milieu de la première bobine (130),
- deux diodes (602, 604) au travers desquelles l'autre borne de la capacité de lissage (142) est connectée respectivement aux deux extrémités de la première bobine (130).

17. Système électrique (100) comportant une source de tension (104) telle qu'une batterie de véhicule automobile, une charge électrique (106) telle que des accessoires électriques de véhicule automobile et un convertisseur électrique (102) selon l'une quelconque des revendications 14 à 16, entre la source de tension (104) et la charge électrique (106).

**Patentansprüche**

1. Magnetkomponente, aufweisend:

- einen Magnetkern (118), aufweisend einen Unterteil (120) in "E"-Form, einen Oberteil (122) in "E"-Form und einen Mittelteil (124) in "I"-Form, der den Unterteil (120) und den Oberteil (124) derart gleichzeitig schließt, dass der Unterteil (120) und der Mittelteil (124) zwei untere Magnetkreise (126G, 126D) definieren und dass der Oberteil (122) und der Mittelteil (124) zwei obere Magnetkreise (128G, 128D) definieren,

wobei die Magnetkomponente **dadurch gekennzeichnet ist, dass** sie aufweist:

- eine erste Spule (130) und eine zweite Spule (132), die um einen mittigen Schenkel (120C) des Unterteils (120) gewickelt sind, um aneinander gekoppelt zu sein,
- eine dritte Spule (134), die um einen mittigen Schenkel (122C) des Oberteils (122) gewickelt ist, wobei die dritte Spule (134) mit der zweiten Spule (132) in Reihe verbunden ist,

wobei der Mittelteil (124) eine Reluktanz aufweist, die sowohl niedriger als die des Unterteils (120) entlang jedes unteren Magnetkreises (126G, 126D) und als die des Oberteils (122) entlang jedes oberen Magnetkreises (128G, 128D) ist.

2. Magnetkomponente nach Anspruch 1, wobei der Oberteil (122) einen ersten Luftspalt (e1) aufweist.

3. Magnetkomponente nach Anspruch 2, wobei der mittige Schenkel (122C) des Oberteils (122) den ersten Luftspalt (e1) aufweist.

4. Magnetkomponente nach Anspruch 2, wobei der mittige Schenkel (122C) des Oberteils (122) eine Strebe aufweist, von der ein Ende beabstandet vom Mittelteil (124) derart endet, dass der erste Luftspalt (e1) gebildet wird.

5. Magnetkomponente nach einem der Ansprüche 1 bis 4, wobei der Unterteil (120) einen zweiten Luftspalt (e2) aufweist.

6. Magnetkomponente nach Anspruch 5, wobei der mittige Schenkel (120C) des Unterteils (120) den zweiten Luftspalt (e2) aufweist.

7. Magnetkomponente nach Anspruch 6, wobei der mittige Schenkel (120C) des Unterteils (120) zwei ausgerichtete Streben aufweist, die gegenüberliegende voneinander beabstandet Enden aufweisen, so dass der zweite Luftspalt (e2) gebildet wird.

8. Magnetkomponente nach Anspruch 1, wobei der mittige Schenkel (120C) des Unterteils (120) und der mittige Schenkel (122C) des Oberteils (122) ohne Luftspalt sind.

9. Magnetkomponente nach einem der Ansprüche 1 bis 8, wobei der Unterteil (120) und der Oberteil (122) des Magnetkerns (118) mit einem Material hergestellt sind, das eine maximale relative Permeabilität unter 100 aufweist, wogegen der Mittelteil (124) mit einem Material hergestellt ist, das eine maximale relative Permeabilität über 100, vorzugsweise über 1000, aufweist.

10. Magnetkomponente nach einem der Ansprüche 1 bis 9, wobei die erste und zweite Spule (130, 132) jeweilige Eigeninduktivitäten L1, L2 aufweisen und derart aneinandergekoppelt sind, dass sie eine Gegeninduktivität M ungleich Null aufweisen, die mit den Eigeninduktivitäten L1, L2 durch einen Kopplungskoeffizienten k verbunden ist:

$$k = \frac{M}{\sqrt{L1 \cdot L2}}$$

wobei der Kopplungskoeffizient k größer oder gleich 0,9, vorzugsweise größer oder gleich 0,95, noch vorzugsweiser größer oder gleich 0,99 ist.

11. Magnetkomponente nach einem der Ansprüche 1 bis 10, wobei der Magnetkern (118) eine axiale Symmetrie in Bezug auf eine vertikale Achse aufweist, die auf den zentralen Schenkeln (120C, 122C) des Oberteils (122) und Unterteils (120) zentriert ist.

12. Magnetkomponente nach einem der Ansprüche 1 bis 11,
aufweisend drei mechanische Teile (402, 404, 406) in "E"-Form, aufweisend jeweils eine transversale Strebe, wovon zwei seitliche Stäbe und eine mittige Strebe abgehen,
wobei die zwei ersten mechanischen Teile (402, 404) einander gegenüber derart zusammengesetzt sind, dass ihre seitlichen und mittigen Streben jeweils ausgerichtet sind, wobei diese zwei ersten mechanischen Teile (402, 406) den Unterteil (120) und Mittelteil (124) des Magnetkerns (118) bilden, wobei der Mittelteil (124) von der transversalen Strebe von einem (404) dieser zwei mechanischen Teile (402, 404) gebildet ist,
und wobei das dritte mechanische Teil (406) gegen die transversale Strebe, die den Mittelteil (124) bildet, derart zusammengesetzt ist, dass der Oberteil (122) des Magnetkerns (118) gebildet wird.

13. Resonanzkreis (116), aufweisend:

- eine Magnetkomponente nach einem der Ansprüche 1 bis 12,
- eine Kapazität (136), die mit der zweiten Spule (132) und der dritten Spule (134) in Reihe verbunden ist.

14. Stromwandler (102), aufweisend:

- einen Spannungsgenerator (108), der konstruiert ist, um ausgehend von einer Gleichspannung (Ve) eine variable Spannung (V) bereitzustellen,
- einen elektrischen Resonanzkreis (116) nach Anspruch 13, um ausgehend von der variablen Spannung (V) einen Wechselstrom (ia) bereitzustellen,
- einen Gleichrichter (138), der konstruiert ist, um ausgehend von dem Wechselstrom (ia) einem elektrischen Verbraucher (106) eine Gleichspannung (Vs) bereitzustellen.

15. Stromwandler (102) nach Anspruch 14, wobei der Gleichrichter (138) aufweist:

- eine Glättungskapazität (142), die bestimmt ist, mit dem elektrischen Verbraucher (106) parallel verbunden zu sein,
- eine Diodenbrücke (140), die am Eingang mit den Enden der ersten Spule (130) und am Ausgang mit den Klemmen der Glättungskapazität (142) verbunden ist.

16. Stromwandler (102) nach Anspruch 14, wobei der Gleichrichter (138) aufweist:

- eine Glättungskapazität (142), die bestimmt ist, mit dem elektrischen Verbraucher (106) parallel verbunden zu sein, wobei eine Klemme der Glättungskapazität (142) an einem Mittelpunkt der ersten Spule (130) verbunden ist,
- zwei Dioden (602, 604), durch welche die andere Klemme der Glättungskapazität (142) jeweils mit den zwei Enden der ersten Spule (130) verbunden ist.

17. Elektrisches System (100), aufweisend eine Spannungsquelle (104) wie eine Kraftfahrzeugbatterie, einen elektrischen Verbraucher (106) wie elektrische Kraftfahrzeugzubehöre und einen Stromwandler (102) nach einem der Ansprüche 14 bis 16 zwischen der Spannungsquelle (104) und dem elektrischen Verbraucher (106).

**Claims**

1. Magnetic component comprising:

- a magnetic core (118) comprising a lower portion (120) in the shape of an "E", an upper portion (122) in the shape of an "E" and a central portion (124) in the shape of an "I" closing both the lower portion (120) and the upper portion (124) in such a way that the lower portion (120) and the central portion (124) define two lower magnetic circuits (126G, 126D) and that the upper portion (122) and the central portion (124) define two upper magnetic circuits (128G, 128D),

said magnetic component being **characterised in that** it comprises:

- a first coil (130) and a second coil (132) wound around a central branch (120C) of the lower portion (120) in order to be coupled to one another,
- a third coil (134) wound around a central branch (122C) of the upper portion (122), the third coil (134) being connected in series with the second coil (132),

the central portion (124) having a reluctance that is lower than both that of the lower portion (120) along each lower magnetic circuit (126G, 126D) and that of the upper portion (122) along each upper magnetic circuit (128G, 128D).

2. Magnetic component according to claim 1, wherein the upper portion (122) comprises a first air gap (e1).

3. Magnetic component according to claim 2, wherein the central branch (122C) of the upper portion (122) comprises the first air gap (e1).

4. Magnetic component according to claim 2, wherein the central branch (122C) of the upper portion (122) comprises a bar of which one end stops at a distance from the central portion (124) in such a way as to form the first air gap (e1).

5. Magnetic component according to any of claims 1 to 4, wherein the lower portion (120) comprises a second air gap (e2).

6. Magnetic component according to claim 5, wherein the central branch (120C) of the lower portion (120) comprises the second air gap (e2).

7. Magnetic component according to claim 6, wherein the central branch (120C) of the lower portion (120) comprises two aligned bars that have ends facing at a distance from one another in such a way as to form the second air gap (e2).

8. Magnetic component according to claim 1, wherein the central branch (120C) of the lower portion (120) and the central branch (122C) of the upper portion (122) are devoid of an air gap.

9. Magnetic component according to any of claims 1 to 8, wherein the lower portion (120) and the upper portion (122) of the magnetic core (118) are made with a material having a maximum relative permeability less than 100, while the central portion (124) is made with a material that has a maximum relative permeability greater than 100, preferably greater than 1,000.

10. Magnetic component according to any of claims 1 to 9, wherein the first and second coils (130, 132) have respective self-inductances L1, L2 and are coupled to one another in such a way as to have a non-zero mutual inductance M, linked to the self-inductances L1, L2 by a coupling coefficient k:

$$k = \frac{M}{\sqrt{L1 \cdot L2}}$$

the coupling coefficient k being greater than or equal to 0.9, preferably greater than or equal to 0.95, more preferably even greater than or equal to 0.99.

11. Magnetic component according to any of claims 1 to 10, wherein the magnetic core (118) has an axial symmetry in relation to a vertical axis centred on the central branches (120C, 122C) of the upper (122) and lower (120) portions.

12. Magnetic component according to any of claims 1 to 11, comprising three mechanical parts (402, 404, 406) in the shape of an "E" each having a crossbar from which extend two lateral bars and a central bar, wherein the first two mechanical parts (402, 404) are assembled facing one another in such a way that their lateral and central bars are respectively aligned, these first two mechanical parts (402, 406) forming the lower (120) and central (124) portions of the magnetic core (118), the central portion (124) being formed by the crossbar of one (404) of these two mechanical parts (402, 404).
and wherein the third mechanical part (406) is assembled against the crossbar forming the central portion (124) in such a way as to form the upper portion (122) of the magnetic core (118).

13. Resonant electric circuit (116) comprising:

   - a magnetic component according to any of claims 1 to 12,
   - a capacitor (136) connected in series with the second coil (132) and the third coil (134).

14. Electrical converter (102) comprising:

   - a voltage generator (108) designed to supply a variable voltage (V) from a direct voltage (Ve),
   - a resonant electric circuit (116) according to claim 13, for supplying an alternating current (ia) from the variable voltage (V),
   - a rectifier (138) designed to supply a direct voltage (Vs) to an electrical load (106) from the alternating current (ia).

15. Electrical converter (102) according to claim 14, wherein the rectifier (138) comprises:

   - a smoothing capacitor (142) intended to be connected in parallel of the electrical load (106),
   - a diode bridge (140) connected at the input at the ends of the first coil (130) and at the output at the terminals of the smoothing capacitor (142).

16. Electrical converter (102) according to claim 14, wherein the rectifier (138) comprises:

   - a smoothing capacitor (142) intended to be connected in parallel of the electrical load (106), a terminal of the smoothing capacitor (142) being connected at a mid-point of the first coil (130),
   - two diodes (602, 604) through which the other terminal of the smoothing capacitor (142) is connected respectively to the two ends of the first coil (130).

17. Electrical system (100) comprising a source of voltage (104) such as a battery of a motor vehicle, an electrical load (106) such as motor vehicle electrical accessories and an electrical converter (102) according to any of claims 14 to 16, between the source of voltage (104) and the electrical load (106).

# Figure 1

# Figure 2

# Figure 3

# Figure 4

# Figure 5

# Figure 6

# Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2254202 A
- US 2137433 A

- FR 2134409 A1

**Littérature non-brevet citée dans la description**

- **DE SIMONE et al.** Design guideline for magnetic integration in LLC resonant converters. *Power Electronics, Electrical Drives, Automation and Motion, 2008. SPEEDAM 2008,* 2008